# FASCICULE DE BREVET EUROPEEN

(11) **EP 4 590 531 B1**
(45) Date de publication et mention de la délivrance du brevet: **22.04.2026**
(21) Numéro de dépôt: 23751675.2
(22) Date de dépôt: 19.07.2023
(51) Int. Cl.: B60K 6/387, B60K 6/48, B60K 6/547, B60W 30/18, B60W 20/30, B60W 10/02, B60W 10/06, B60W 10/08, B60W 10/113, B60W 30/19

(54) **PROCÉDÉ DE PILOTAGE D'UNE CHAÎNE DE TRACTION HYBRIDE À BOÎTE DE VITESSES À DOUBLE EMBRAYAGES LORS D'UNE PHASE DE RÉCUPÉRATION D'ÉNERGIE**
VERFAHREN ZUR STEUERUNG EINES HYBRIDANTRIEBSSTRANGS MIT EINEM DOPPELKUPPLUNGSGETRIEBE WÄHREND EINER ENERGIERÜCKGEWINNUNGSPHASE
METHOD FOR CONTROLLING A HYBRID DRIVE TRAIN WITH A DOUBLE-CLUTCH GEARBOX DURING AN ENERGY RECOVERY PHASE

(30) Priorité: 22.09.2022 FR 2209619
(43) Date de publication de la demande: 30.07.2025
(73) Titulaire: Stellantis Auto SAS, 78300 Poissy (FR)
(72) Inventeur: SCHAEFFER, Eric, 75013 PARIS (FR); HABBANI, Ridouane, 92600 ASNIERES SUR SEINE (FR)
(74) Mandataire: PSIP
(86) Numéro de dépôt international: PCT/FR2023/051114
(87) Numéro de publication internationale: WO 2024/062166

(56) Documents cités:
- DE-A1- 102017 216 984
- US-A1- 2015 360 676
- US-A1- 2017 101 083
- US-A1- 2020 307 601

## Description

La présente invention porte sur un procédé de pilotage d'une chaîne de traction hybride à boîte de vitesses à double embrayages lors d'une phase de récupération d'énergie.

De façon connue en soi, une chaîne de traction hybride pour un véhicule automobile peut comporter un moteur thermique et une machine électrique tournante montés sur un train de roues, notamment un train de roues avant.

L'état de la technique est connu des documents US 2017101083 A1, US 2015360676 A1, DE 10 2017 216984 A1 et US 2020307601 A1.

La machine électrique est disposée en entrée d'une boîte de vitesses à double embrayages. La boîte de vitesses comporte un premier embrayage de changement de rapport de vitesse associé à une première demi-boîte de vitesses et un deuxième embrayage de changement de rapport de vitesse associé à une deuxième demi-boîte de vitesses.

Chaque demi-boîte de vitesses comporte une pluralité de pignons d'engrenages définissant une pluralité de rapports de vitesse permettant de démultiplier le couple transmis par un arbre d'entrée à un arbre de sortie de la demi-boîte de vitesses. Les rapports de vitesse sont associés à des synchroniseurs.

Une telle configuration présente l'avantage de pouvoir passer un rapport de vitesse en limitant au maximum une rupture de couple à la roue. En effet, pendant qu'une des demi-boîtes de vitesses présente un rapport en cours engagé et son embrayage fermé, il est possible de présélectionner un rapport de vitesse cible dans l'autre demi-boîte de vitesses dont l'embrayage est ouvert ou glissant sans transmission de couple.

Le changement de rapport de vitesse pourra alors s'effectuer rapidement en ouvrant l'embrayage de la demi-boîte de vitesses ayant le rapport de vitesse en cours et en fermant l'embrayage de la demi-boîte de vitesses ayant le rapport de vitesse cible. Cette stratégie de changement de rapport de vitesse permet d'éviter la rupture de couple qui se produit classiquement sur les chaînes de traction munies d'un embrayage simple.

Par ailleurs, un embrayage de connexion et de déconnexion du moteur thermique est apte à sélectivement connecter le moteur thermique à l"entrée de la boîte de vitesses lorsque ledit embrayage est à l'état fermé et à isoler le moteur thermique par rapport à l'entrée de la boîte de vitesses (et donc par rapport aux roues) lorsque ledit embrayage est à l'état ouvert.

Au cours d'une phase de récupération d'énergie, un couple mécanique est transmis des roues vers la machine électrique qui fonctionne en mode générateur pour recharger la batterie du véhicule automobile.

Ainsi, le couple mécanique remonte des roues vers la machine électrique via la demi-boîte de vitesses dont l'embrayage est fermé. On procède au changement de rapport de présélection dans l'autre demi-boîte de vitesses associée à l'embrayage ouvert ou glissant sans transmission de couple.

Afin de garantir une bonne réactivité en couple, notamment si une demande de complément de couple par le moteur thermique est effectuée, l'embrayage de connexion et de déconnexion du moteur thermique peut être piloté en position fermée même dans un mode de roulage électrique pur. Par ailleurs, l'embrayage associé à la boîte de vitesses dans laquelle est présélectionné le rapport de vitesse est piloté glissant avec un couple transmissible de consigne nul de façon à pouvoir répondre rapidement à une demande de changement de rapport de démultiplication entre la machine électrique tournante et les roues du véhicule automobile.

Une telle stratégie de pilotage connecte les inerties des pièces tournantes du moteur thermique à la demi-boîte de vitesses associée à l'embrayage ouvert ou glissant, ce qui peut perturber le fonctionnement des synchroniseurs actionnés lors d'un passage de rapports en présélection.

L'invention vise à remédier efficacement à cet inconvénient en proposant un procédé de pilotage d'une chaîne de traction hybride d'un véhicule automobile comportant:
- un moteur thermique,
- une machine électrique tournante connectée électriquement à une batterie,
- une boîte de vitesses à double embrayages comportant une première demi-boîte de vitesses associée à un premier embrayage de changement de rapport de vitesse et une deuxième demi-boîte de vitesses associée à un deuxième embrayage de changement de rapport de vitesse,
- un embrayage de connexion et de déconnexion du moteur thermique,
- alors qu'une stratégie de récupération d'énergie est mise en œuvre pour recharger la batterie via une transmission de couple mécanique passant par la première demi-boîte de vitesses associée au premier embrayage de changement de rapport de vitesse dans un état fermé, et que le deuxième embrayage de changement de rapport de vitesse est piloté glissant et l'embrayage de connexion et de déconnexion du moteur thermique se trouve dans un état fermé,
suite à une détection d'une demande de changement de rapport de vitesse en présélection, ledit procédé comporte:
- une étape d'ouverture du deuxième embrayage de changement de rapport de vitesse et de l'embrayage de connexion et de déconnexion du moteur thermique,
- une étape de présélection d'un rapport de vitesse cible dans la deuxième demi-boîte de vitesses, et
- une étape de mise en glissement du deuxième embrayage de changement de rapport de vitesse et une étape de fermeture de l'embrayage de connexion et de déconnexion du moteur thermique.

L'invention permet ainsi, en ouvrant le deuxième embrayage de changement de rapport de vitesse et l'embrayage de connexion et de déconnexion du moteur thermique pendant la sélection d'un rapport de vitesse cible, d'éviter tout risque d'à-coup ou de nuisance sonore lors d'un changement de rapport de vitesse. L'invention présente également un caractère économique, dans la mesure où elle peut être implémentée simplement en modifiant la programmation d'un calculateur de la chaîne de traction.

Selon une mise en œuvre de l'invention, la stratégie de récupération d'énergie est mise en œuvre lors d'une phase de décélération du véhicule automobile.

Selon une mise en œuvre de l'invention, lors de la mise en œuvre de la stratégie de récupération d'énergie, un couple mécanique issu des roues est transmis à la machine électrique tournante pilotée en mode générateur pour recharger une batterie du véhicule automobile.

L'invention a également pour objet un calculateur d'une chaîne de traction hybride d'un véhicule automobile comportant un moteur thermique, une machine électrique tournante connectée électriquement à une batterie, une boîte de vitesses à double embrayages comportant une première demi-boîte de vitesses associée à un premier embrayage de changement de rapport de vitesse et une deuxième demi-boîte de vitesses associée à un deuxième embrayage de changement de rapport de vitesse, ledit calculateur étant configuré pour:
- ouvrir le deuxième embrayage de changement de rapport de vitesse et l'embrayage de connexion et de déconnexion du moteur thermique, alors qu'une stratégie de récupération d'énergie est mise en œuvre pour recharger la batterie via une transmission de couple mécanique passant par la première demi-boîte de vitesses associée au premier embrayage de changement de rapport de vitesse dans un état fermé,
- présélectionner un rapport de vitesse cible dans la deuxième demi-boîte de vitesses, et
- mettre en glissement du deuxième embrayage de changement de rapport de vitesse et fermer l'embrayage de connexion et de déconnexion du moteur thermique.

Selon une réalisation de l'invention, ledit calculateur est configuré pour mettre en œuvre la stratégie de récupération d'énergie lors d'une phase de décélération du véhicule automobile.

Selon une réalisation de l'invention, le calculateur est configuré pour piloter la machine électrique tournante en mode générateur lors d'une mise en œuvre de la stratégie de récupération d'énergie.

L'invention concerne en outre une chaîne de traction comportant un calculateur tel que précédemment défini.

Selon une réalisation de l'invention, la chaîne de traction comporte un moteur thermique, une machine électrique tournante connectée électriquement à une batterie, et une boîte de vitesses à double embrayages comportant une première demi-boîte de vitesses associée à un premier embrayage de changement de rapport de vitesse et une deuxième demi-boîte de vitesses associée à un deuxième embrayage de changement de rapport de vitesse.

Selon une réalisation de l'invention, la chaîne de traction comporte en outre un embrayage de connexion et de déconnexion du moteur thermique.

L'invention a également pour objet un véhicule automobile comportant une chaîne de traction telle que précédemment définie.

L'invention sera mieux comprise à la lecture de la description qui suit et à l'examen des figures qui l'accompagnent. Ces figures ne sont données qu'à titre illustratif mais nullement limitatif de l'invention.

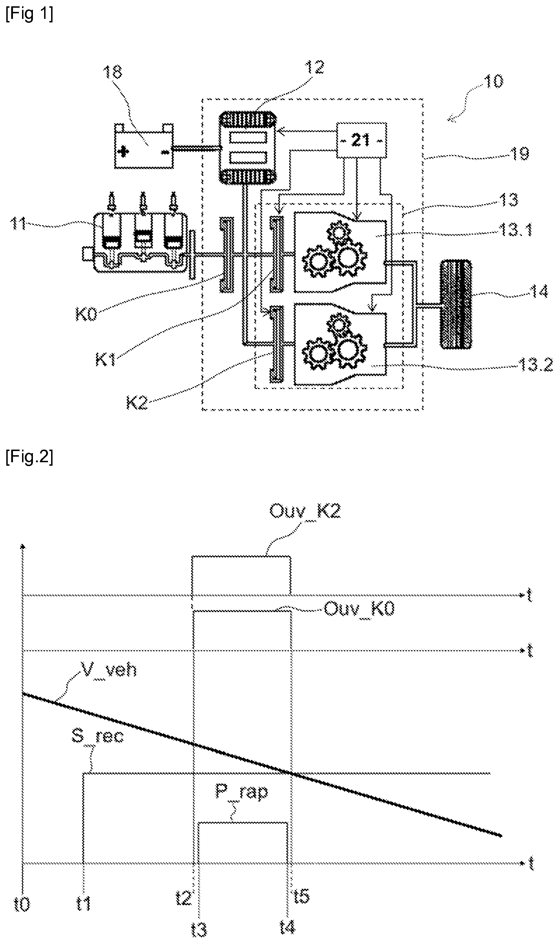

[Fig. 1] La figure 1 est une représentation schématique d'une chaîne de traction hybride d'un véhicule automobile mettant en œuvre un procédé selon l'invention de pilotage de ladite chaîne de traction lors d'une phase de récupération d'énergie;
[Fig. 2] La figure 2 est une représentation graphique, en fonction du temps, des différents paramètres (vitesse du véhicule, activation d'une stratégie de récupération d'énergie, présélection d'un rapport de vitesse cible, ouverture/fermeture des embrayages) lors de la mise en œuvre du procédé selon l'invention de pilotage de la chaîne de traction hybride à boîte de vitesses à double embrayages lors d'une phase de récupération d'énergie.

La figure 1 montre une chaîne de traction hybride 10 de véhicule automobile comportant un moteur thermique 11 et une machine électrique tournante 12 montés sur un train de roues 14, notamment un train de roues avant.

La machine électrique 12 est disposée en entrée d'une boîte de vitesses 13 à double embrayages. La boîte de vitesses 13 comporte une première demi-boîte de vitesses 13.1 associée à un premier embrayage K1 de changement de rapport de vitesse et une deuxième demi-boîte de vitesses 13.2 associée à un deuxième embrayage K2 de changement de rapport de vitesse.

Chaque demi-boîte de vitesses 13.1, 13.2 comporte une pluralité de pignons d'engrenages définissant une pluralité de rapports de vitesse permettant de démultiplier le couple transmis par un arbre d'entrée à un arbre de sortie de la demi-boîte de vitesses. Les rapports de vitesse sont associés à des synchroniseurs.

Par "demi-boîte de vitesses", on entend une boîte de vitesses qui comporte une partie de l'ensemble des rapports de vitesse dont dispose le véhicule automobile. Même si cela est possible, une demi-boîte de vitesses 13.1, 13.2 ne comporte donc pas nécessairement la moitié des rapports de vitesse dont dispose le véhicule automobile. Avantageusement, une demi-boîte de vitesses 13.1, 13.2 comporte les rapports de vitesse pairs et l'autre demi-boîte de vitesses 13.1, 13.2 comporte les rapports de vitesse impairs. Les arbres de sortie des demi-boîtes de vitesses 13.1, 13.2 sont reliés aux roues 14 par l'intermédiaire d'un différentiel et d'une descente de pont (non représentés).

En outre, un embrayage K0 de connexion et de déconnexion du moteur thermique 11 est apte à sélectivement connecter le moteur thermique 11 à l'entrée de la boîte de vitesses 13 lorsque ledit embrayage K0 est à l'état fermé et à isoler le moteur thermique 11 par rapport à l'entrée de la boîte de vitesses 13 lorsque ledit embrayage K0 est à l'état ouvert. A cet effet, l'embrayage K0 est disposé entre le moteur thermique 11 et la machine électrique tournante 12.

La machine électrique tournante 12 est montée entre l'embrayage K0 et les embrayages K1, K2 de changement de rapport de la boîte de vitesses 13. La machine électrique tournante 12 pourra être connectée en entrée de la boîte de vitesses 13 par l'intermédiaire d'un réducteur à engrenages ou à courroie (non représenté).

La machine électrique tournante 12 est connectée électriquement à une batterie 18, notamment via un onduleur. Dans un mode de fonctionnement moteur, la machine électrique tournante 12 est apte à transformer une énergie électrique issue d'une batterie 18 en une énergie mécanique pour assurer une traction du véhicule. Dans ce cas, l'onduleur transforme la tension continue issue de la batterie 18 en une tension alternative appliquée sur les différentes phases de la machine électrique tournante 12.

Lors de la mise en œuvre d'une stratégie de récupération d'énergie, la machine électrique tournante 12 est également apte à fonctionner dans un mode générateur dans lequel la machine électrique tournante 12 transforme une énergie mécanique issue du couple des roues 14 en une énergie électrique permettant de recharger la batterie 18. Dans ce cas, l'onduleur transforme la tension alternative générée par les phases de la machine électrique tournante 12 entraînée par les roues en une tension continue appliquée sur les bornes de la batterie 18.

L'ensemble formé par la machine électrique tournante 12, la boîte de vitesses 13, ainsi que les embrayages K1, K2 de changement de rapport de vitesse, et l'embrayage K0 de connexion et de déconnexion du moteur thermique 11 pourra être intégré à l'intérieur d'un dispositif 19 de transmission électrique constituant un composant indépendant de la chaîne de traction 10.

Un calculateur 21 assure le pilotage des différents composants de la chaîne de traction 10.

On décrit ci-après, en référence avec la figure 2, la mise en œuvre du procédé selon l'invention de pilotage de la chaîne de traction hybride 10 à boîte de vitesses à double embrayages lors d'une phase de récupération d'énergie.

A l'instant t0, le véhicule automobile entre dans une phase de décélération observable notamment lors d'une phase de freinage. La vitesse du véhicule V_veh décroit progressivement. Un rapport de vitesse en cours est engagé dans une des demi-boîtes de vitesses 13.1, 13.2, par exemple la première demi-boîte de vitesses 13.1 associée à un embrayage K1 fermé. Le deuxième embrayage K2 associé à la deuxième demi-boîte de vitesses 13.2 est piloté glissant de préférence à couple nul.

A l'instant t1, le calculateur 21 pilote une stratégie de récupération d'énergie S_rec pour recharger la batterie 18. Cette stratégie de récupération d'énergie S_rec est pilotée en fonction du niveau de charge de la batterie 18 et d'un niveau de décélération du véhicule automobile. Un couple mécanique est alors transmis des roues 14 vers la machine électrique tournante 12 via la première demi-boîte de vitesses 13.1 et l'embrayage K1. La machine électrique tournante 12 qui fonctionne en mode générateur recharge la batterie 18.

A l'instant t2, une demande de changement de rapport de vitesse en présélection est détectée. Le calculateur 21 pilote alors une ouverture du deuxième embrayage de changement de rapport de vitesse (cf. signal Ouv_K2) ainsi qu'une ouverture de l'embrayage K0 de connexion et de déconnexion du moteur thermique (cf. signal Ouv_K0).

A l'instant t3, le calculateur 21 pilote une présélection P_rap, c'est-à-dire un engagement, d'un rapport de vitesse cible dans la deuxième demi-boîte de vitesses 13.2 associée à l'embrayage K2 qui se trouve désormais dans un état ouvert. Par rapport à un rapport de vitesse en cours N (N étant un nombre entier), le rapport de vitesse cible pourra par exemple être le rapport N-1 ou le rapport N+1.

A l'instant t4, le rapport de vitesse cible a été engagé dans la deuxième demi-boîte de vitesses 13.2.

A l'instant t5, le calculateur 21 pilote une mise en glissement du deuxième embrayage K2 de changement de rapport de vitesse et une étape de fermeture de l'embrayage K0 de connexion et de déconnexion du moteur thermique 11.

Bien entendu, le procédé selon l'invention pourra également être mis en œuvre lorsque la phase de récupération d'énergie est mise en œuvre via la deuxième demi-boîte de vitesses 13.2 associée à l'embrayage K2 dans un état fermé. Lorsqu'une demande de changement de rapport de vitesse est détectée, l'embrayage K1 précédemment en glissement est ouvert ainsi que l'embrayage K0, et le changement de rapport en présélection est effectué dans la première demi-boîte de vitesses 13.1.

## Revendications

1. Procédé de pilotage d'une chaîne de traction hybride (10) d'un véhicule automobile comportant:
- un moteur thermique (11),
- une machine électrique tournante (12) connectée électriquement à une batterie (18),
- une boîte de vitesses (13) à double embrayages comportant une première demi-boîte de vitesses (13.1) associée à un premier embrayage (K1) de changement de rapport de vitesse et une deuxième demi-boîte de vitesses (13.2) associée à un deuxième embrayage (K2) de changement de rapport de vitesse,
- un embrayage (K0) de connexion et de déconnexion du moteur thermique (11),
**caractérisé en ce que**, alors qu'une stratégie de récupération d'énergie (S_rec) est mise en œuvre pour recharger la batterie (18) via une transmission de couple mécanique passant par la première demi-boîte de vitesses (13.1) associée au premier embrayage (K1) de changement de rapport de vitesse dans un état fermé, et que le deuxième embrayage (K2) de changement de rapport de vitesse est piloté glissant et l'embrayage (K0) de connexion et de déconnexion du moteur thermique se trouve dans un état fermé,
suite à une détection d'une demande de changement de rapport de vitesse en présélection, ledit procédé comporte :
- une étape d'ouverture du deuxième embrayage (K2) de changement de rapport de vitesse et de l'embrayage (K0) de connexion et de déconnexion du moteur thermique (11),
- une étape de présélection (P_rap) d'un rapport de vitesse cible dans la deuxième demi-boîte de vitesses (13.2), et
- une étape de mise en glissement du deuxième embrayage (K2) de changement de rapport de vitesse et une étape de fermeture de l'embrayage (K0) de connexion et de déconnexion du moteur thermique.

2. Procédé selon la revendication 1, **caractérisé en ce que** la stratégie de récupération d'énergie (S_rec) est mise en œuvre lors d'une phase de décélération du véhicule automobile.

3. Procédé selon la revendication 1 ou 2, **caractérisé en ce que** lors de la mise en œuvre de la stratégie de récupération d'énergie (S_rec), un couple mécanique issu des roues (14) est transmis à la machine électrique tournante (12) pilotée en mode générateur pour recharger une batterie (18) du véhicule automobile.

4. Calculateur (21) d'une chaîne de traction hybride (10) d'un véhicule automobile comportant un moteur thermique (11), une machine électrique tournante (12) connectée électriquement à une batterie (18), une boîte de vitesses (13) à double embrayages comportant une première demi-boîte de vitesses (13.1) associée à un premier embrayage (K1) de changement de rapport de vitesse et une deuxième demi-boîte de vitesses (13.2) associée à un deuxième embrayage (K2) de changement de rapport de vitesse,
**caractérisé en ce que**, ledit calculateur (21) est configuré pour:
- ouvrir le deuxième embrayage (K2) de changement de rapport de vitesse et l'embrayage (K0) de connexion et de déconnexion du moteur thermique (11), alors qu'une stratégie de récupération d'énergie (S_rec) est mise en œuvre pour recharger la batterie (18) via une transmission de couple mécanique passant par la première demi-boîte de vitesses associée au premier embrayage de changement de rapport de vitesse dans un état fermé,
- présélectionner (P_rap) un rapport de vitesse cible dans la deuxième demi-boîte de vitesses (13.2),
- mettre en glissement du deuxième embrayage (K2) de changement de rapport de vitesse et fermer l'embrayage (K0) de connexion et de déconnexion du moteur thermique.

5. Calculateur selon la revendication 4, **caractérisé en ce qu'**il est configuré pour mettre en œuvre la stratégie de récupération d'énergie (S_rec) lors d'une phase de décélération du véhicule automobile.

6. Calculateur selon la revendication 4 ou 5, **caractérisé en ce que** le calculateur (21) est configuré pour piloter la machine électrique tournante (12) en mode générateur lors d'une mise en œuvre de la stratégie de récupération d'énergie (S_rec).

7. Chaîne de traction (10) comportant un calculateur (21) défini selon l'une quelconque des revendications 4 à 6.

8. Chaîne de traction selon la revendication 7, **caractérisée en ce qu'**elle comporte un moteur thermique (11), une machine électrique tournante (12) connectée électriquement à une batterie (18), et une boîte de vitesses (13) à double embrayages comportant une première demi-boîte de vitesses (13.1) associée à un premier embrayage (K1) de changement de rapport de vitesse et une deuxième demi-boîte de vitesses (13.2) associée à un deuxième embrayage (K2) de changement de rapport de vitesse.

9. Chaîne de traction selon la revendication 7 ou 8, **caractérisée en ce qu'**elle comporte en outre un embrayage (K0) de connexion et de déconnexion du moteur thermique (11).

10. Véhicule automobile comportant une chaîne de traction (10) définie selon l'une quelconque des revendications 7 à 9.

## Patentansprüche

1. Verfahren zum Steuern eines Hybridantriebsstrangs (10) eines Kraftfahrzeugs, umfassend:
- einen Verbrennungsmotor (11),
- eine rotierende elektrische Maschine (12), die elektrisch mit einer Batterie (18) verbunden ist,
- ein Doppelkupplungsgetriebe (13) mit einem ersten Teilgetriebe (13.1), das einer ersten Gangwechselkupplung (K1) zugeordnet ist, und einem zweiten Teilgetriebe (13.2), das einer zweiten Gangwechselkupplung (K2) zugeordnet ist,
- eine Kupplung (K0) zum Verbinden und Trennen des Verbrennungsmotors (11),
**dadurch gekennzeichnet, dass** während eine Energierückgewinnungsstrategie (S_rec) umgesetzt wird, um die Batterie (18) über eine mechanische Drehmomentübertragung durch das erste Teilgetriebe (13.1) mit der ersten Gangwechselkupplung (K1) im geschlossenen Zustand aufzuladen, und während die zweite Gangwechselkupplung (K2) im Schlupfbetrieb gesteuert wird und die Kupplung (K0) sich im geschlossenen Zustand befindet,
nach Erkennung einer Vorwahl-Anforderung eines Gangwechsels umfasst das Verfahren:
- einen Schritt des Öffnens der zweiten Gangwechselkupplung (K2) und der Kupplung (K0) zum Verbinden und Trennen des Verbrennungsmotors (11),
- einen Vorwahlschritt (P_rap) eines Zielgangs im zweiten Teilgetriebe (13.2), und
- einen Schritt des Versetzens der zweiten Gangwechselkupplung (K2) in den Schlupfbetrieb und einen Schritt des Schließens der Kupplung (K0).

2. Verfahren nach Anspruch 1, **dadurch gekennzeichnet, dass** die Energierückgewinnungsstrategie (S_rec) während einer Verzögerungsphase des Kraftfahrzeugs umgesetzt wird.

3. Verfahren nach Anspruch 1 oder 2, **dadurch gekennzeichnet, dass** während der Umsetzung der Energierückgewinnungsstrategie (S_rec) ein von den Rädern (14) stammendes mechanisches Drehmoment auf die rotierende elektrische Maschine (12) übertragen wird, die im Generatormodus gesteuert wird, um eine Batterie (18) des Kraftfahrzeugs aufzuladen.

4. Steuergerät (21) eines Hybridantriebsstrangs (10) eines Kraftfahrzeugs, umfassend einen Verbrennungsmotor (11), eine rotierende elektrische Maschine (12), die elektrisch mit einer Batterie (18) verbunden ist, ein Doppelkupplungsgetriebe (13) mit einem ersten Teilgetriebe (13.1), das einer ersten Gangwechselkupplung (K1) zugeordnet ist, und einem zweiten Teilgetriebe (13.2), das einer zweiten Gangwechselkupplung (K2) zugeordnet ist,
**dadurch gekennzeichnet, dass** das Steuergerät (21) dazu ausgelegt ist:
- die zweite Gangwechselkupplung (K2) und die Kupplung (K0) zum Verbinden und Trennen des Verbrennungsmotors (11) zu öffnen,
- einen Zielgang (P_rap) im zweiten Teilgetriebe (13.2) vorzuwählen,
- die zweite Gangwechselkupplung (K2) in den Schlupfbetrieb zu versetzen und die Kupplung (K0) zu schließen.

5. Steuergerät nach Anspruch 4, **dadurch gekennzeichnet, dass** es dazu ausgelegt ist, die Energierückgewinnungsstrategie (S_rec) während einer Verzögerungsphase umzusetzen.

6. Steuergerät nach Anspruch 4 oder 5, **dadurch gekennzeichnet, dass** es dazu ausgelegt ist, die rotierende elektrische Maschine (12) im Generatormodus zu steuern.

7. Hybridantriebsstrang (10), umfassend ein Steuergerät (21) nach einem der Ansprüche 4 bis 6.

8. Hybridantriebsstrang nach Anspruch 7, **dadurch gekennzeichnet, dass** er einen Verbrennungsmotor (11), eine rotierende elektrische Maschine (12) und ein Doppelkupplungsgetriebe (13) umfasst.

9. Hybridantriebsstrang nach Anspruch 7 oder 8, **dadurch gekennzeichnet, dass** er ferner eine Kupplung (K0) umfasst.

10. Kraftfahrzeug, umfassend einen Hybridantriebsstrang (10) nach einem der Ansprüche 7 bis 9.

## Claims

1. Method for controlling a hybrid powertrain (10) of a motor vehicle comprising:
- an internal combustion engine (11),
- a rotating electric machine (12) electrically connected to a battery (18),
- a dual-clutch gearbox (13) comprising a first half-gearbox (13.1) associated with a first gear-shift clutch (K1) and a second half-gearbox (13.2) associated with a second gear-shift clutch (K2),
- a clutch (K0) for connecting and disconnecting the internal combustion engine (11),
**characterized in that**, while an energy recovery strategy (S_rec) is implemented to recharge the battery (18) via a mechanical torque transmission passing through the first half-gearbox (13.1) associated with the first gear-shift clutch (K1) in a closed state, and while the second gear-shift clutch (K2) is controlled in slip mode and the clutch (K0) for connecting and disconnecting the internal combustion engine is in a closed state,
following detection of a preselection gear change request, said method comprises:
- a step of opening the second gear-shift clutch (K2) and the clutch (K0) for connecting and disconnecting the internal combustion engine (11),
- a step of preselecting (P_rap) a target gear ratio in the second half-gearbox (13.2), and
- a step of putting the second gear-shift clutch (K2) into slip mode and a step of closing the clutch (K0) for connecting and disconnecting the internal combustion engine.

2. Method according to claim 1, **characterized in that** the energy recovery strategy (S_rec) is implemented during a deceleration phase of the motor vehicle.

3. Method according to claim 1 or 2, **characterized in that** during implementation of the energy recovery strategy (S_rec), a mechanical torque originating from the wheels (14) is transmitted to the rotating electric machine (12) controlled in generator mode in order to recharge a battery (18) of the motor vehicle.

4. Control unit (21) of a hybrid powertrain (10) of a motor vehicle comprising an internal combustion engine (11), a rotating electric machine (12) electrically connected to a battery (18), a dual-clutch gearbox (13) comprising a first half-gearbox (13.1) associated with a first gear-shift clutch (K1) and a second half-gearbox (13.2) associated with a second gear-shift clutch (K2),
**characterized in that** said control unit (21) is configured to:
- open the second gear-shift clutch (K2) and the clutch (K0) for connecting and disconnecting the internal combustion engine (11), while an energy recovery strategy (S_rec) is implemented to recharge the battery (18) via a mechanical torque transmission passing through the first half-gearbox associated with the first gear-shift clutch in a closed state,
- preselect (P_rap) a target gear ratio in the second half-gearbox (13.2),
- put the second gear-shift clutch (K2) into slip mode and close the clutch (K0) for connecting and disconnecting the internal combustion engine.

5. Control unit according to claim 4, **characterized in that** it is configured to implement the energy recovery strategy (S_rec) during a deceleration phase of the motor vehicle.

6. Control unit according to claim 4 or 5, **characterized in that** the control unit (21) is configured to control the rotating electric machine (12) in generator mode during implementation of the energy recovery strategy (S_rec).

7. Powertrain (10) comprising a control unit (21) defined according to any one of claims 4 to 6.

8. Powertrain according to claim 7, **characterized in that** it comprises an internal combustion engine (11), a rotating electric machine (12) electrically connected to a battery (18), and a dual-clutch gearbox (13) comprising a first half-gearbox (13.1) associated with a first gear-shift clutch (K1) and a second half-gearbox (13.2) associated with a second gear-shift clutch (K2).

9. Powertrain according to claim 7 or 8, **characterized in that** it further comprises a clutch (K0) for connecting and disconnecting the internal combustion engine (11).

10. Motor vehicle comprising a powertrain (10) defined according to any one of claims 7 to 9.
